# EUROPEAN PATENT APPLICATION

(11) **EP 3 521 957 A1**
(43) Date of publication of application: **07.08.2019**
(21) Application number: 19154346.1
(22) Date of filing: 29.01.2019
(51) Int. Cl.: G05B 19/18, B23D 59/00, B23D 45/06, B21D 43/28

(54) **METHOD FOR CONTROLLING THE MOVEMENT OF A CIRCULAR BLADE OF A CUTTING-OFF MACHINE FOR SECTION BARS**

(30) Priority: 29.01.2018 IT 201800002112
(71) Applicant: F.O.M. Industrie S.r.l., 47841 Cattolica (IT)
(72) Inventor: LATTANZI, Lorenzo, 61121 PESARO (PU) (IT)
(74) Representative: Manconi, Stefano

(57) **Abstract**

A method for controlling the movement of a circular blade of a cutting-off machine for section bars along a cutting plane of the blade (9), wherein a theoretical removed surface per unit of time (SUPR) of the circular blade (9) along the cutting plane is determined as a function of the material of a section bar (2) to be cut, of the features and of the angular speed of the circular blade (9), a surface to be removed (SUPA) is determined starting from a total surface enclosed by a profile (27) of a cross section of said section bar (2) along the cutting plane, a cutting trajectory (28) is identified along the cutting plane taking into account the theoretical removed surface per unit of time (SUPR) and the surface to be removed (SUPA), through a simulation of the removal of material during a regular succession of time steps (ΔT), each involving a plurality of attempts to move the rotation axis (21) towards the surface to be removed (SUPA) in a same number of directions (DIR), which are angularly distributed according to a given angular step (θ), and the rotation axis (21) of the blade (9) is moved along the identified cutting trajectory (28).

## Description

### CROSS-REFERENCE TO RELATED APPLICATIONS

This patent application claims priority from Italian patent application no. 102018000002112 filed on 29/01/2018.

### TECHNICAL FIELD

The invention relates to a method for controlling the movement of a circular blade of a cutting-off machine for section bars and to a corresponding cutting-off machine for section bars.

In particular, the invention finds advantageous, though non-exclusive application in cutting-off machines for cutting section bars made of aluminium, light alloys or PVC, having a cutting head provided with a circular blade and movable along two axes perpendicular to the rotation axis of the circular blade, to which explicit reference will be made in the description below without because of this losing in generality.

### BACKGROUND ART

As it is known, the best cutting quality of a section bar is obtained by allowing the circular blade to remove a basically constant quantity of material per unit of time, over the entire cut of the section bar. The circular blade leaves, on the two surfaces resulting from the cut, a track consisting of a succession of arcs close to one another. A good-quality cut is supposed to produce arcs having lengths that are similar to one another on each one of the two surfaces.

In order to obtain the aforesaid result, the rotation axis of the circular blade needs to be moved along a trajectory selected as a function of the profile of the cross section of the section bar to be cut. The trajectory typically is chosen by the operator in an intuitive manner before operating the cutting-off machine and the cutting-off machine usually allows for a change only in the angle of a straight trajectory. For example, the best cutting trajectory for a section bar having a square cross section is a straight trajectory, which is inclined by 45° relative to a side of the section bar.

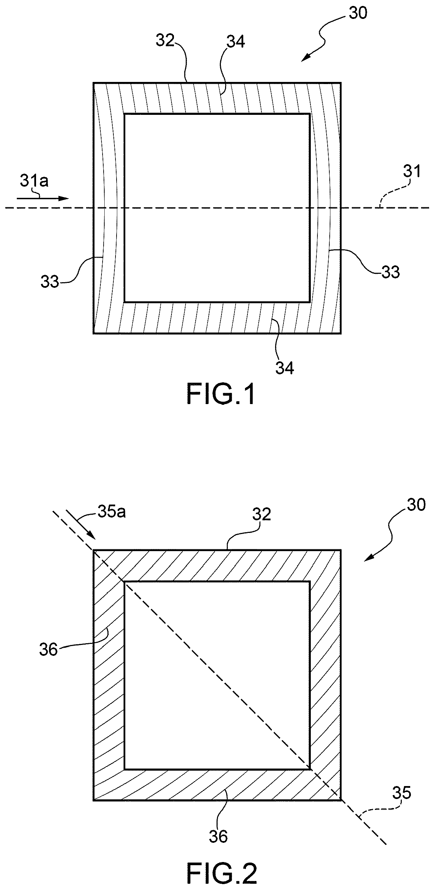

By way of example, appended figure 1 shows the surface resulting from the cut of a section bar with a square cross section, generally indicated, as a whole, with 30, which is cut by moving the rotation axis of the circular blade according to a straight cutting trajectory 31 parallel to a side 32 of the section bar 30, in the direction indicated with 31a. On the surface there are the arcs produced by the action of the circular blade: the arcs 33 on the surface of the portions of the section bar 30 perpendicular to the cutting trajectory 31 are much longer than the arcs 34 appearing on the other portions of the section bar parallel to the cutting trajectory 31. The longer arcs, namely the ones indicated with 33, correspond to a more scarce cutting quality, as the circular blade removes more material per unit of time, assuming that the moving speed of the rotation axis is constant.

Appended figure 2 shows the surface resulting from the cut of the same section bar 30, but obtained by moving the rotation axis of the blade according to a new straight cutting trajectory 35, which is inclined by 45° relative to the side 32 of the section bar 30, in the direction indicated with 35a. In this case, on the entire surface of the cut there are arcs 36 having similar and relatively short lengths, which reveal an ideal quality of the cut.

However, in case of section bars with complex cross sections, the choice of the best angle of a straight trajectory is not simple and, furthermore, a straight trajectory could not be the ideal solution.

### DISCLOSURE OF INVENTION

The object of the invention is to provide a method for controlling the movement of a circular blade of a cutting-off machine for section bars, said method being conceived to overcome the drawback described above and, at the same time, being easy and economic to be implemented.

According to the invention, there are provided a method for controlling the movement of a circular blade of a cutting-off machine for section bars and a cutting-off machine for section bars according to the appended claims.

### BRIEF DESCRIPTION OF THE DRAWINGS

The invention will now be described with reference to the accompanying drawings, which show a non-limiting embodiment thereof, wherein:
- figures 1 and 2 show the surface resulting from the cut of a section bar with a square cross section, which was cut crosswise by means of a cutting-off machine with a circular blade according to two respective cutting modes, which are described above in this document;
- figure 3 shows, according to a schematic perspective view, a cutting-off machine for section bars, which is configured to control the movements of its circular blade according to the method of the invention;
- figure 4 shows a simplified flowchart of the method according to the invention;
- figure 5 shows an example of the profile of the cross section of a section bar to be cut with the cutting-off machine of figure 3; and
- figure 6 shows a cutting trajectory along the cutting plane of the circular blade of the cutting-off machine of figure 3, which is obtained for the profile of figure 5 following the method of the invention.

### BEST MODE FOR CARRYING OUT THE INVENTION

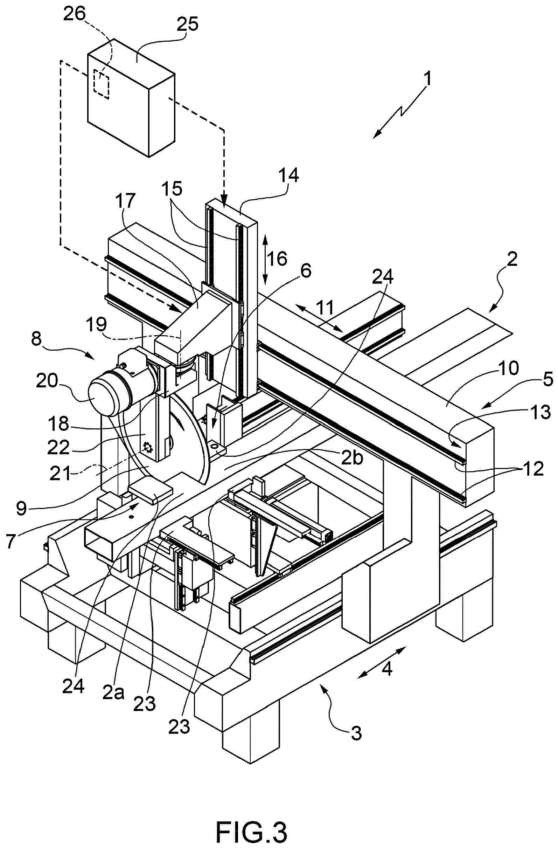

In figure 3, number 1 generically indicates, as a whole, a cutting-off machine for elongated section bars and, in particular, for section bars made of aluminium, light alloys, PVC or similar materials, and number 2 indicates a section bar to be cut with the cutting-off machine 1. The cutting-off machine 1 comprises a base 3, which extends along a horizontal direction 4, an overhead crane 5, which is mounted on the base 3 so as to be movable in the direction 4, two holding devices 6 and 7 to keep the section bar 2 still on the base 3 parallel to the direction 4, and a cutting device 8, which is mounted on the overhead crane 5 above the holding devices 6 and 7 and comprises a circular blade 9 to cut the section bar 2 into two pieces. Each holding device 6, 7 is also designed to hold a respective piece 2a, 2b of the section bar 2 after the cut.

The overhead crane 5 comprises a crosspiece 10, which extends in a horizontal direction 11 orthogonal to the direction 4 and has a respective guide 12 extending along a vertical face 13 thereof in the direction 11. In the example shown herein, the guide 12 is in the form of a track.

The cutting device 8 comprises a first motor-driven slide 14, which is coupled to the guide 12 in a sliding manner so as to make straight movements along the crosspiece 10 in the direction 11 and comprises a respective guide 15 extending in a vertical direction 16 and, hence, orthogonal to both directions 4 and 11, a second motor-driven slide 17, which is coupled to the guide 15 in a sliding manner so as to make straight movements in the direction 16, and a bracket 18, which is coupled to the slide 17 in a rotary manner so as to rotate around an axis 19 parallel to the direction 16 and carries the circular blade 9 as well as a motor 20, which is designed to operate the circular blade 9, causing it to rotate around a horizontal rotation axis 21. In particular, an arm 22 is connected under the bracket 18 and the circular blade 9 is connected to a lower end of the arm 22 in a rotary manner. In the example shown herein, the guide 15 is in the form of a track, as well.

The rotation of the bracket 18 around the axis 19 allows the cutting angle of the section bar 2 to be changed relative to its longitudinal axis.

Each holding device 6, 7 comprises an approaching organ 23 to correctly position the section bar 2 or the pieces 2a and 2b in the direction 11 and a clamping organ 24 to lock the section bar 2 or the pieces 2a and 2b in the direction 16.

The cutting-off machine 1 comprises an electronic controlling and processing unit 25, which comprises a digital memory 26 and is configured to operate the motor 20 and control the motor-driven slides 14 and 17 so as to move the rotation axis 21 of the circular blade 9 along a cutting plane, which is orthogonal to the rotation axis 21, following a particular trajectory, while the circular blade 9 rotates, said trajectory being built as a function of features of the circular blade 9 and of the section bar 2. The controlling and processing unit 25 comprises, for example, a personal computer and a numerical control device interfaced with the personal computer and designed to control the motor-driven slides 14 and 17.

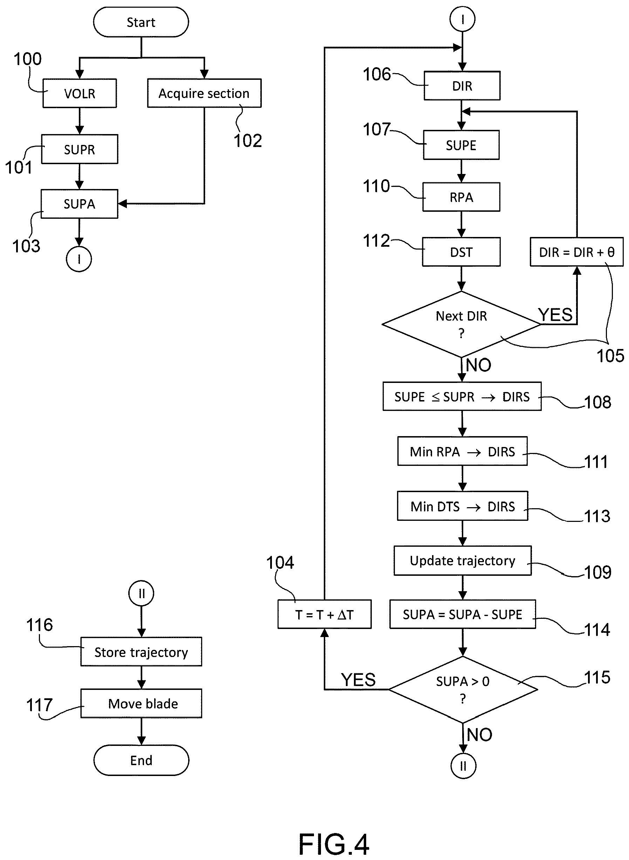

In particular, in the controlling and processing unit 25 there is installed a software designed to implement the method for controlling the movement of the circular blade according to the invention, said method being described hereinafter with reference to figures 4, 5 and 6.

With reference to figure 4, which shows a flowchart of the method, a theoretical removed volume per unit of time VOLR of the circular blade 9 is determined as a function of the material of the section bar 2, of the geometrical features of the circular blade 9 and of the angular speed of the circular blade 9 (step 100). In particular, the geometrical features of the circular blade 9 that are taken into account comprise the outer diameter, the number of teeth as well as height and width of each teeth of the circular blade 9.

A theoretical removed surface per unit of time SUPR along the plane orthogonal to the rotation axis 21 is determined based on the theoretical removed volume VOLR (step 101). In particular, the theoretical removed surface SUPR is calculated by dividing the theoretical removed volume VOLR by the thickness of the circular blade 9.

The theoretical removed volume per unit of time VOLR and the theoretical removed surface per unit of time SUPR are stored in the digital memory 26 and do not need to be redetermined until the type of circular blade 9 and the material of the section bar 2 are changed.

The profile of a cross section of the section bar 2 along a cutting plane, which can be inclined relative to the longitudinal axis of the section bar 2 as much as one wants, is acquired and stored in the digital memory 26 (step 102). In the example of figure 3, the cutting plane is at 90° relative to the longitudinal axis of the section bar 2.

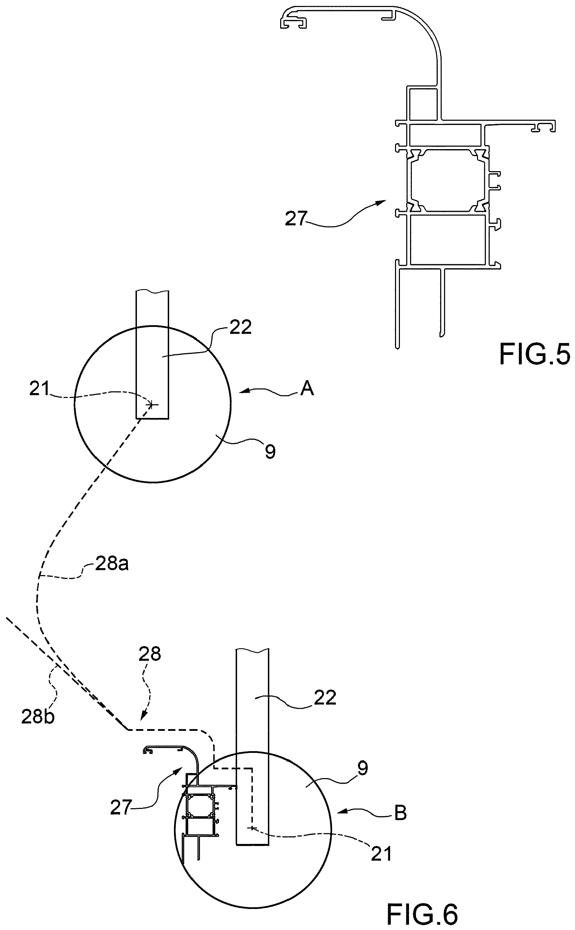

Figure 5 shows an example of the profile of the cross section of the section bar 2, indicated with 27. The profile 27 of the section bar 2 can easily be acquired from CAD drawings of the section bar 2.

With reference to figure 4, again, a surface to be removed SUPA is determined starting from a total surface enclosed by the profile 27 of the section bat 2 (step 103). In particular, the surface to be removed SUPA coincides, at first, with the total surface enclosed by the profile 27.

The cutting trajectory along the cutting plane, which must be followed by the rotation axis 21, is identified taking into account the surface to be removed SUPA and the theoretical removed surface per unit of time SUPR, simulating the removal of material during a regular succession of time steps ΔT (step 104), each involving a plurality of attempts to move the rotation axis 21 towards the surface to be removed SUPA in a same number of directions DIR, which are angularly distributed, relative to the position of the rotation axis 21 in the cutting plane in the current time step, according to a given angular step (θ) (steps 105).

The time step ΔT and the angular step θ have respective values, which are selected in such a way that the simulation, as a whole, does not last too long, for example around 10 s.

More in detail, for each time step, the directions DIR are determined as all those directions which intercept the surface to be removed SUPA, starting from the position of the rotation axis 21 in the cutting plane in said time step, and which are angularly distributed, namely are spaced apart from one another, according to the angular step θ (106). In other words, each one of the directions DIR goes through the current position of the rotation axis 21 and through a respective point of the surface to be removed SUPA and the respective attempt to move the rotation axis 21 is directed towards the surface to be removed SUPA.

The material removal simulation involves, for each one of the directions DIR, determining an actual removed surface per unit of time SUPE as a function of the direction DIR, of the range of movement ΔS in the direction DIR, of the surface to be removed SUPA and of the theoretical removed surface per unit of time SUPR (step 107) and, for each time step, selecting that direction whose actual removed surface per unit of time SUPE is smaller than or equal to the theoretical removed surface per unit of time SUPR (step 108).

The cutting trajectory is updated with the selected direction DIRS (step 109).

Advantageously, for each one of said directions DIR, a perimeter-area ratio, indicated hereinafter with RPA, is calculated between the perimeter and the area of the actual removed surface per unit of time SUPE (step 110) and, for each time step, in case of different directions which each offer a respective actual removed surface per unit of time SUPE which is smaller than or equal to the theoretical removed surface per unit of time SUPR, the selected direction DIRS is the one that minimizes the perimeter-area ratio RPA (111) .

Advantageously, for each one of said directions DIR, the distance DST between the rotation axis 21 and the perimeter of the surface to be removed SUPA is determined (step 112) and, for each time step, in case of different directions that minimize the perimeter-area ratio RPA within a predetermined margin ΔR, the selected direction DIRS is the one that minimizes the distance DST (step 113).

At the end of each time step, the surface to be removed SUPA is redetermined removing from it a surface that depends on the actual removed surface per unit of time SUPE obtained for the selected direction DIRS and on the duration of the time step ΔT (step 114, symbolically shown as subtraction between SUPA and SUPE).

The simulation for the construction of the trajectory ends, namely the regular succession of time steps ends, when the surface to be removed SUPA is absent, namely was completely removed (NO output, step 115). The identified trajectory is stored in the digital memory 26 (step 116).

Finally, the rotation axis 21 is moved, acting upon the motor-driven slides 14 and 17, following the cutting trajectory identified while the circular blade 9 rotates (step 117).

Figure 6 shows the cutting trajectory, indicated with 28, resulting for the profile 27 of figure 5 and a circular blade 9 having a relatively small diameter relative to the dimensions of the profile 27, applying the method described above. The circular blade 9 is shown in an initial position A, far from the profile 27 before the cut, and in a final position B, at the end of the cut. The first part of the cutting trajectory 28 far from the profile 27, indicated with 28a, is not significant and is only a joining part to be joined to the direction of attack 28b of the profile 27 at the beginning of the actual cutting trajectory 28, in which the circular blade 9 goes through the profile 27.

The method for controlling the movement of the circular blade 9 described above substantially involves identifying the cutting trajectory 28 off-line, i.e. before operating the cutting device 8 in order to cut the section bar 2. The control of the movements of the slides 14 and 17 is then carried out following the already identified cutting trajectory 28.

According to a further embodiment of the invention which is not shown herein, the cutting trajectory is built carrying out a real-time simulation, namely the rotation axis 21 is moved at the end of each time step following the respective trajectory update. In order to implement this further embodiment, an extremely powerful controlling and processing unit 25 is needed, which is capable of completing all the processing operations of a time step ΔT within an amount of time that has the same duration as the time step ΔT.

The main advantage of the control method described above is that of automatically obtaining a substantially uniform cut of the section bar 2, in terms of removed material per unit of time, along the cross section of the section bar 2, namely a cut that produces, on the surfaces resulting from the cut, a succession of arcs arranged close to one another and having similar lengths, regardless of the profile of the cross section of the section bar 2.

## Claims

1. A method for controlling the movement of a circular blade of a cutting-off machine for section bars along a cutting plane, which is orthogonal to the rotation axis (21) of the circular blade (9), the method comprising:
- determining (100) a theoretical removed volume per unit of time (VOLR) of the circular blade (9) as a function of the material of a section bar (2) to be cut, of the geometrical features of the circular blade (9) and of the angular speed of the circular blade (9);
- determining (101) a theoretical removed surface per unit of time (SUPR) along the cutting plane, dividing said theoretical removed volume per unit of time (VOLR) by the thickness of said circular blade (9);
- determining (102, 103) a surface to be removed (SUPA) starting from a total surface enclosed by a profile (27) of a cross section of said section bar (2) along the cutting plane, said profile (27) being stored in a digital memory (26) ;
- identifying (104-116) a cutting trajectory (28) along the cutting plane taking into account the theoretical removed surface per unit of time (SUPR) and the surface to be removed (SUPA), through a simulation of the removal of material during a regular succession of time steps (ΔT), each involving a plurality of attempts to move the rotation axis (21) towards said surface to be removed (SUPA) in a same number of directions (DIR), which go through the position of said rotation axis (21) on said cutting plane in the current time step and are angularly distributed according to a given angular step (θ); and
- moving (117) the rotation axis (21) following the identified cutting trajectory (28).

2. A method according to claim 1, wherein identifying (104-116) a cutting trajectory (28) along the cutting plane comprises:
- for each one of said directions (DIR), determining (107) an actual removed surface per unit of time (SUPE) as a function of the direction (DIR), of the surface to be removed (SUPA) and of the theoretical removed surface per unit of time (SUPR);
- for each time step, selecting (108) that direction (DIRS) whose actual removed surface per unit of time (SUPE) is smaller than or equal to the theoretical removed surface per unit of time (SUPR); and
- updating (109) the cutting trajectory (28) with the selected direction (DIRS).

3. A method according to claim 2, wherein identifying (104-116) a cutting trajectory (28) along the cutting plane comprises:
- for each one of said directions (DIR), determining (110) a perimeter-area ratio (RPA) between the perimeter and the area of said actual removed surface per unit of time (SUPE); and
- for each time step, in case of different directions (DIR) which offer, each, a respective actual removed surface per unit of time (SUPE) which is smaller than or equal to the theoretical removed surface per unit of time (SUPR), selecting (111) that direction (DIRS) that minimizes the perimeter-area ratio (RPA).

4. A method according to claim 3, wherein identifying (105-116) a cutting trajectory (28) along the cutting plane comprises:
- for each one of said directions (DIR), determining (112) a distance (DIST) between the rotation axis (21) and the perimeter of the surface to be removed (SUPA); and
- for each time step, in case of different directions (DIR) which minimize, each, the perimeter-area ratio (RPA) within a predetermined margin (ΔR), selecting (113) that direction (DRS) that minimizes said distance (DTS).

5. A method according to any one of the claims from 2 to 4, wherein identifying (104-116) a cutting trajectory (28) along the cutting plane comprises:
- at the end of each time step, redetermining (114) said surface to be removed (SUPA) by removing from the latter a surface that depends on the actual removed surface per unit of time (SUPE) obtained for the selected direction (DIRS) .

6. A method according to claim 5, wherein said regular succession of time steps (ΔT) ends when said surface to be removed (SUPA) has been completely removed.

7. A method according to any one of the claims from 1 to 6, wherein said geometrical features of the circular blade (9) comprise the outer diameter, the number of teeth as well as height and width of each tooth of the circular blade (9).

8. A method according to any one of the claims from 1 to 7 and comprising:
- storing the identified trajectory in said digital memory (26).

9. A cutting-off machine for section bars comprising a circular blade (9), driving means (20) to keep the circular blade (9) rotating around a rotation axis (21), first motor-driven moving means (14) to move the rotation axis (21) along a first direction (11), second motor-driven moving means (17) to move the rotation axis (21) along a second direction (16), which is perpendicular to the first direction (11), and being **characterized in that** it comprises electronic processing and controlling means (25), which comprise a digital memory (26) and are configured to operate said driving means (20), to control said first and second motor-driven moving means (14, 17) while the circular blade (9) rotates and to implement the method according to one of the claims from 1 to 8.
